# EUROPÄISCHE PATENTSCHRIFT

(11) **EP 2 408 346 B1**
(45) Veröffentlichungstag und Bekanntmachung des Hinweises auf die Patenterteilung: **27.12.2017**
(21) Anmeldenummer: 10712000.8
(22) Anmeldetag: 17.03.2010
(51) Int. Cl.: A47L 13/16, B29C 67/20, B29C 44/28, C08B 16/00, C08L 1/06, C08L 1/24, C08J 9/26

(54) **VERFAHREN ZUR KONTINUIERLICHEN HERSTELLUNG VON SCHWAMMKÖRPERN AUS REGENERIETER CELLULOSE UND EIN SCHWAMMKÖRPER**
METHOD FOR CONTINUOUSLY PRODUCING SPONGE BODIES MADE OF REGENERATED CELLULOSE AND A SPONGE BODY
PROCÉDÉ DE PRÉPARATION CONTINUE DE CORPS SPONGIEUX À PARTIR DE CELLULOSE RÉGÉNÉRÉE, ET CORPS SPONGIEUX

(30) Priorität: 19.03.2009 DE 102009013515
(43) Veröffentlichungstag der Anmeldung: 25.01.2012
(73) Patentinhaber: Carl Freudenberg KG, 69469 Weinheim (DE)
(72) Erfinder: HUNGER, Marc, 68519 Viernheim (DE); HAUSDORF, Jörg, 64668 Rimbach (DE); NOWOTTNICK, Heike, 86150 Augsburg (DE); KVARNLÖF, Niklas, S-65638 Karlstad (SE); LEHNHARDT, Peter, S-603 54 Norrköping (SE)
(86) Internationale Anmeldenummer: PCT/EP2010/001664
(87) Internationale Veröffentlichungsnummer: WO 2010/105806

(56) Entgegenhaltungen:
- DE-A1- 1 569 226
- DE-C1- 19 623 704
- US-A- 2 899 704
- US-A- 3 109 703
- US-A- 3 142 714
- US-A- 3 276 072
- Anonymous: "Pack of 6 Cellulose Sponge Scourers" Internet citation, [Online] Seiten 1-2, XP002596980 Manufactum Products Gefunden im Internet: URL:http://www.manufactum.com/Produkt/1936 55/1402227/Packof6CelluloseSpongeScourers. html> [gefunden am 2010-08-18]

## Beschreibung

### Technisches Gebiet

Die Erfindung betrifft ein Verfahren zur Herstellung von Schwammkörpern aus regenerierter Cellulose unter Verwendung von Porenbildnern aus Natriumsulfatdekahydrat bei dem zunächst eine Viskoselösung bereit gestellt wird, dieser Viskoselösung der Porenbildner zugemischt wird, die Viskoselösung auf einem Transportband abgelegt wird, wobei die Viskoselösung auf dem Transportband durch Bäder geführt wird, wodurch sich eine poröse Masse aus regenerierter Cellulose bildet und einen Schwammkörper, der nach dem Verfahren erhältlich ist.

### Stand der Technik

Ein derartiges Verfahren ist aus der DE 196 23 704 C1 bekannt. Dort ist beschrieben, welche Verfahrensschritte allgemein erforderlich sind, um aus Cellulose einen Schwammkörper herzustellen. In verschiedenen Verfahrensschritten wird aus Zellstoff in einer Xanthogenierungsreaktion Viskose hergestellt. Diese wird mit Natriumsulfatdekahydrat, auch als Glaubersalz bekannt, als Porenbildner vermischt auf einem Transportband abgelegt und durch mehrere Bäder geführt, wobei das Xanthogenat aufgespalten und der Porenbildner herausgelöst wird. Dabei entsteht ein schwammartiges Gebilde.

Aus der DE 1 569 226 ist es bekannt, den Porenbildner zu großen Kristallen zu agglomerieren. Dabei wird der Porenbildner durch Zusammenpressen zu großen Kristallen kompaktiert. Dieses Verfahren eignet sich insbesondere für Porenbildner aus Natriumsulfatdekahydrat, da dieses einen Schmelzpunkt von etwa 32°C aufweist und dabei in eigenem Kristallwasser schmilzt. Durch das Zusammenpressen schmelzen die miteinander zu verpressenden Kristalle teilweise auf, wodurch sich die einzelnen Kristalle miteinander verbinden, wobei die Verbindung nach Beendigung des Pressvorganges erhalten bleibt.

Schwammkörper können entweder kontinuierlich oder diskontinuierlich hergestellt werden. Die kontinuierliche Herstellung ist zwar besonders effektiv, allerdings ist bei diesem Verfahren die maximale Dicke des Schwammkörpers bislang auf etwa 1 cm begrenzt. Derartig hergestellte Schwammkörper können als Rollenware weiterverarbeitet werden. Dies ermöglicht ein besonders effektiven Folgeprozess. Zum Herstellen dickerer Schwammkörper sind aber eine besonders geringe Transportgeschwindigkeit und eine besonders große Auftragsmenge erforderlich. Dabei besteht die Gefahr, dass die auf das Transportband abgelegte Viskose-Glaubersalz-Mischung in sich zusammensinkt und die Poren zusammenfallen, wodurch sich ein Schwammkörper mit geringer Dicke und hohem Raumgewicht ergibt. Das diskontinuierliche Verfahren erlaubt zwar die Herstellung größerer Schwammkörper, jedoch ist die Herstellung aufwendiger und kostenintensiver und der Schwammkörper muss allseitig zugeschnitten werden. Dadurch ergeben sich große Abfallmengen.

US 2,899,704 (A) beschreibt eine Vorrichtung zur Herstellung von faserverstärkten Schwammtüchern ausgehend von einer Viskose und Natriumsulfatdekahydrat- Kristalle enthaltenden Zusammensetzung.

US 3,109,703 A, US 3,142,714 A und US 3,276,072 A beschreiben jeweils Verfahren zur Herstellung von Schwämmen ausgehend von einer Viskose und Natriumsulfatdekahydrat- Kristalle enthaltenden Zusammensetzung.

### Darstellung der Erfindung

Der Erfindung liegt die Aufgabe zugrunde, ein Verfahren zur Herstellung eines Schwammkörpers aus regenerierter Cellulose zu entwickeln, welches eine kostengünstige Herstellung von Schwammkörpern mit großer Dicke erlaubt.

Diese Aufgabe wird mit den Merkmalen von Anspruch 1 und 5 gelöst. Auf vorteilhafte Ausgestaltungen nehmen die Unteransprüche Bezug.

Zur Lösung der Aufgabe wird bei dem erfindungsgemäßen Verfahren zur kontinuierlichen Herstellung von Schwammkörpern aus regenerierter Cellulose unter Verwendung von zumindest teilweise agglomerierten Porenbildnern zunächst eine Viskoselösung bereit gestellt, dieser Viskoselösung der Porenbildner zugemischt, die Viskoselösung auf einem sich kontinuierlich bewegenden Transportband abgelegt, wobei die Viskoselösung auf dem Transportband durch Bäder geführt wird, wodurch sich eine poröse Masse aus regenerierter Cellulose bildet. Das erfindungsgemäße Verfahren zeichnet sich dadurch aus, dass der Porenbildner pelletiert wird. Die mit dem Porenbildner versetzte Viskoselösung wird durch eine etwa auf 100°C erhitzte Flüssigkeit geführt. Dabei schmelzen die Porenbildner auf und durch die hohe Salzkonzentration koaguliert die Viskoselösung an der Grenzfläche und es bilden sich stabile Poren heraus. Des Weiteren wird die Viskose in Cellulose überführt und der Porenbildner wird aus dem sich nun gebildeten Schwammkörper herausgewaschen. Porenbildner im Sinne der Erfindung bestehen aus einem Alkali- oder Erdalkalisalz einer anorganischen Säure, wobei insbesondere Natriumsulfat und Magnesiumsulfat verwendbar sind, insbesondere kommt ein Porenbildnber Natriumsulfatdekahydrat in Frage. Dieser Porenbildner schmilzt bei 32 °C im eigenen Kristallwasser auf. Diese Eigenschaft ermöglicht eine effektive Prozessführung zur Herstellung von Schwammkörpern. Die Verwendung von Natriumsulfatdekahydrat als Porenbildnet für den den vorbeschriebenen Prozess ist allgemein bekannt. Erfindungsgemäß erfolgt die Herstellung des Schwammkörpers durch Ablegen der Viskoselösung auf einem sich bewegenden Transportband kontinuierlich, so dass die Schwammkörper besonders effektiv und kostengünstig hergestellt werden können. Überraschenderweise wurde dabei festgestellt, dass die agglomerierten Porenbildner während der kontinuierlichen Fertigung mechanisch stabil sind. Es bilden sich verhältnismäßig große und dabei auch sehr gleichmäßige Poren, so dass Schwammkörper mit großer Dicke und einem besonders geringen Raumgewicht hergestellt werden können. Die großen agglomerierten Porenbildner können in großen Mengen der Viskoselösung beigemischt werden. So ist es möglich, einem Teil Viskoselösung 5 Teile Porenbildner beizumischen. Als Ergebnis ergibt sich ein Schwammkörper mit einem besonders geringen Raumgewicht. Es kann also bei guter Verwendbarkeit des Schwammkörpers Rohstoff und Energie eingespart werden. Dieser Kostenvorteil ergibt sich insbesondere auch bei der Herstellung dünner etwa 0,5 cm dicker Schwammtücher. Des Weiteren ist es nicht erforderlich die Transportgeschwindigkeit des Transportbandes zu verringern, um einen erfindungsgemäßen Schwammkörper großer Dicke herzustellen. Es ist auch denkbar, nur einen Teil der Porenbildner zu agglomerieren und einen weiteren Teil der Porenbildner in der ursprünglichen Korngröße der Viskoselösung beizumischen. Dabei erhält man eine Mischung verschieden großer Porenbildner, was zu verschieden großen Poren führt. Dabei können die feineren Porenbildner insbesondere Zwischenräume zwischen den großen Porenbildnern ausfüllen. So kann im Ergebnis ein Schwammkörper mit einer größeren Porosität hergestellt werden, als bei einer Verwendung von ausschließlich agglomerierten Porenbildnern möglich wäre. Der Viskoselösung können Zuschlagstoffe, insbesondere Baumwollfasern und Farbstoffen zugemischt werden, um bessere Festigkeitswerte und besondere Farbausgestaltungen des Schwammkörpers zu erhalten.

Der Porenbildner wird pelletiert. Pelletieren ist ein rein mechanisches Verfahren, um einzelne Porenbildner-Kristalle zu kompaktieren. Im Vergleich zu Kompaktierungs-Verfahren bei denen der Porenbildner zunächst aufgeschmolzen wird, um ihn dann in großen Einheiten zu kristallisieren, ist das Pelletieren ein Verfahren, welches besonders schnell ist und dabei einen geringen Energiebedarf aufweist. Je nach Ausgestaltung der Pelletiereinrichtung können Porenbildner-Pellets in verschiedenen Formen und Dimensionen hergestellt werden. Durch den Druck, den die Pelletiereinrichtung auf die Porenbildner ausübt, schmelzen die Porenbildner-Kristalle an den Korngrenzen auf und verbinden sich nach dem Rekristallisieren fest mit den benachbarten Porenbildner-Kristallen. Dabei ist es nicht erforderlich, zusätzlich Wärmeenergie zuzuführen. Im Sinne der Erfindung ist Pelletieren somit eine spezielle, nämlich rein mechanische Methode, der Kompaktierung. Kompaktierungsverfahren, bei denen eine Kompaktierung ein Aufschmelzen und anschließendes Kristallisieren des Porenbildners zu großen Einheiten umfasst, sind nicht Gegenstand dieses Anspruchs.

Der Porenbildner kann in stäbchenform vorliegen. Derartige Formen lassen sich besonders einfach herstellen. Beispielsweise können die Porenbildner dazu durch einen Siebkörper gepresst werden. Die Dicke und die Länge der kompaktierten Porenbildner können angepasst werden.

Der Porenbildner kann reiskornförmig vorliegen. Für die Stabilität des Schwammkörpers ist es vorteilhaft, wenn die Porenbildner und damit die aus den Porenbildnern gebildeten Poren abgerundet ausgebildet sind und keine scharfen Kanten aufweisen. In diesem Sinne ist es auch denkbar, die Porenbildner in anderen abgerundeten Geometrien herzustellen.

Ein nach dem erfindungsgemäßen Verfahren hergestellter Schwammkörper weist eine Dicke bis zu 3 cm, bevorzugt bis zu 2 cm auf. Ein nach dem üblichen Verfahren mit kleinkristallinem Porenbildner hergestellter Schwammkörper weist eine maximale Dicke von etwa 1 cm auf. Um diese Dicke zu erreichen, ist es allerdings bei dem herkömmlichen Verfahren notwendig, die Transportgeschwindigkeit sehr stark zu reduzieren. Das erfindungsgemäße Verfahren erlaubt die kontinuierliche Herstellung von Schwammkörpern, die wesentlich dicker als 1 cm, nämlich bis zu 3 cm sind, wobei der erfindungsgemäße Schwammkörper ein besonders niedriges Raumgewicht aufweist.

Das Raumgewicht des Schwammkörpers kann zwischen 35 und 55 kg/m³ betragen. Als Raumgewicht wird die Dichte des porösen Schwammkörpers einschließlich der in dem Schwammkörper eingeschlossenen Poren bezeichnet. Das Raumgewicht wird auch als Rohdichte bezeichnet. Üblicherweise liegt das Raumgewicht eines Schwammkörpers der in einem kontinuierlichen Verfahren hergestellt wurde bei etwa 60 kg/m³ bei einer Dicke die typischerweise im Bereich kleiner als 1 cm liegt. Für den erfindungsgemäßen Schwammkörper ist somit je Volumeneinheit eine geringere Menge an Viskoselösung erforderlich. Derartige Schwammkörper mit geringem Raumgewicht weisen vorteilhafterweise eine besonders hohe Wasseraufnahmekapazität auf.

Der Schwammkörper kann wenigstens zwei Hauptseiten aufweisen. Derartige Schwammkörper sind im Wesentlichen flach ausgebildet, wie es beispielsweise von Schwammtüchern bekannt ist. Beide Hauptseiten können dabei Wischflächen bilden und mit der zu reinigenden Fläche in Kontakt gebracht werden.

Zumindest eine Hauptseite kann durch eine Haut gebildet sein. Eine derartige Haut bildet sich stets an der Grenzfläche des Schwammkörpers im Rohzustand bei einer Herstellung nach dem zuvor beschriebenen Verfahren. Insbesondere diskontinuierlich hergestellte Schwammkörper weisen eine derartige Haut häufig nicht auf, da die Schwammkörper allseitig zugeschnitten werden müssen. Bei diesen Schwammkörpern bildet die Schnittfläche die Grenzfläche. Bei dem erfindungsgemäßen Schwammkörper ist insbesondere vorteilhaft, dass dieser mit großer Dicke hergestellt werden kann, wobei die Hauptseiten von vornherein das gewünschte Profil aufweisen. Es ist lediglich erforderlich, den Schwammkörper an dessen Seiten auf die gewünschte Größe zuzuschneiden. Bei dem Schwammkörper mit Haut ist insbesondere vorteilhaft, dass durch die relativ geschlossene Oberfläche, der Schwammkörper mechanisch besonders stabil ist, einen angenehmen Griff hat, aber Wasser trotzdem gut aufnimmt.

Zumindest eine Hauptseite kann profiliert sein. Bei dem erfindungsgemäßen Schwammkörper erfolgt das Einprägen der Profilierung bereits beim Ablegen der Viskoselösung auf dem Transportband.

Zumindest eine Hauptseite kann mit einer Abrasivschicht versehen sein. Die Abrasivschicht kann dabei aufgesprüht oder auflaminiert werden, wobei sich das Aufsprühen der Abrasivschicht besonders einfach und effektiv in den Herstellprozess integrieren lässt. Die Abrasivschicht kann dabei aus einem Binder, beispielsweise einem Harz, und aus abrasiven Partikeln organischen und/oder anorganischen Ursprungs bestehen.

### Kurzbeschreibung der Zeichnung

Einige Ausführungsbeispiele des erfindungsgemäßen Verfahrens und des erfindungsgemäßen Schwammkörpers werden nachfolgend anhand der Figuren näher beschrieben. Diese zeigen, jeweils schematisch:
- Fig. 1: ein Schwammtuch im Schnitt;
- Fig. 2: ein Schwammtuch mit einer abrasiven Beschichtung im Schnitt.

### Ausführung der Erfindung

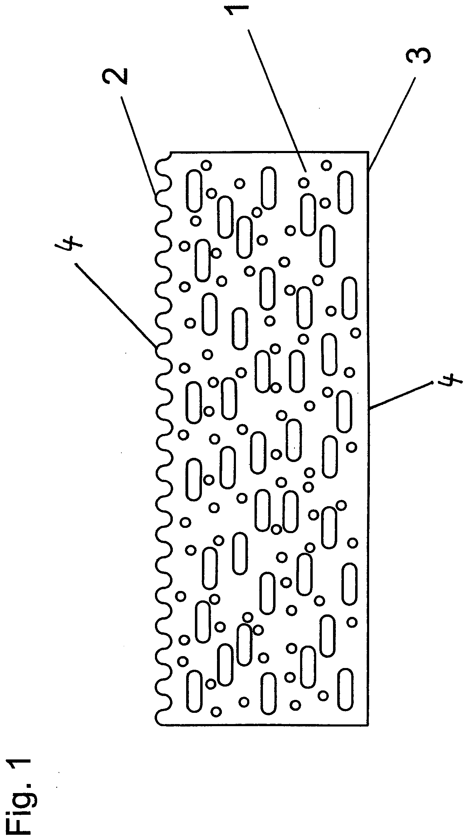

Figur 1 zeigt einen Schwammkörper 1, hergestellt aus regenerierter Cellulose. Die Herstellung des Schwammkörpers 1 erfolgt in einem kontinuierlichen Verfahren unter Verwendung von teilweise agglomerierten Porenbildnern aus Natriumsulfatdekahydrat. Dazu wurden die Porenbildner in einer Pelletiereinrichtung pelletiert, wobei die Walzen der Pelletiereinrichtung so ausgestaltet sind, dass die Porenbildner reiskornförmig vorliegen. Zur Herstellung des Schwammkörpers 1 wird zunächst nach dem bekannten Xanthogenierungverfahren eine Viskoselösung hergestellt. Dieser Viskoselösung wird der Porenbildner zugemischt, die Viskoselösung mit den beigemischen Porenbildner wird mittels eines Extruders auf einem sich kontinuierlich bewegenden Transportband abgelegt. Anschließend wird die Viskoselösung auf dem Transportband durch Bäder enthaltend heißes Wasser und gegebenenfalls Natronlauge geführt, Dabei schmelzen die Porenbildner auf, die Viskoselösung beginnt um die verflüssigten Porenbildner herum an zu koagulieren und es bildet sich eine poröse Masse aus regenerierter Cellulose.

Der nach diesem Verfahren hergestellte Schwammkörper 1 weist eine Dicke von 2,5 cm und ein Raumgewicht von 50 kg/m³ auf. Der Schwammkörper 1 ist ein flächiger Gegenstand mit zwei Hauptseiten 2, 3, die beide als Wischfläche verwendbar sind. Beide Hauptseiten 2, 3 werden durch die herstellungsbedingt entstandene Haut 4 begrenzt und eine Hauptseite 2 ist profiliert und weist eine Rillenstruktur auf.

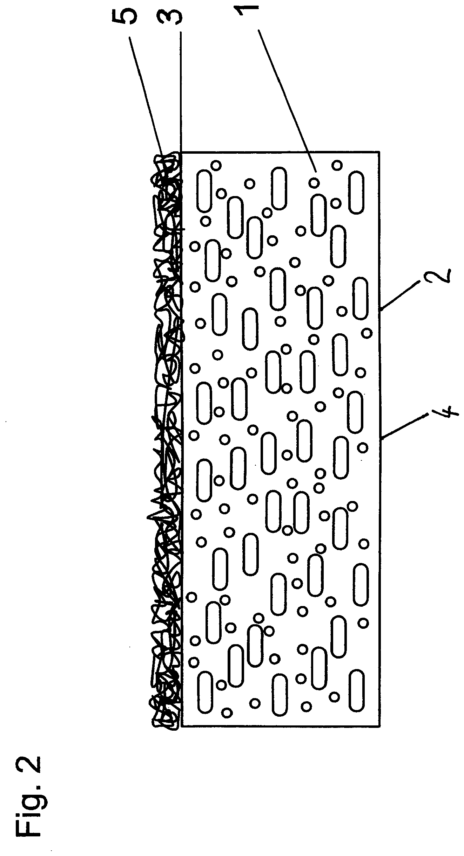

Figur 2 zeigt einen Schwammkörper gemäß Figur 1, wobei dieser Schwammkörper 1 auf einer Hauptseite 3 mit einer Abrasivschicht 5 versehen ist. Die Abrasivschicht 5 besteht aus einem Binder und anorganischen abrasiven Partikeln. Die Abrasivschicht 5 wurde mittels Sprühverfahren auf den Schwammkörper aufgetragen. In anderen Ausgestaltungen kann die Abrasivschicht 5 aus gebundenen Fasern bestehen.

## Patentansprüche

1. Verfahren zur kontinuierlichen Herstellung von Schwammkörpem (1) aus regenerierter Cellulose unter Verwendung von zumindest teilweise agglomerierten Porenbildnern bei dem zunächst eine Viskoselösung bereit gestellt wird, dieser Viskoselösung der Porenbildner zugemischt wird, die Viskoselösung auf einem sich kontinuierlich bewegenden Transportband abgelegt wird, wobei die Viskoselösung auf dem Transportband durch Bäder geführt wird, wodurch sich eine poröse Masse aus regenerierter Cellulose bildet, **dadurch gekennzeichnet, dass** der Porenbildner pelletiert wird.

2. Verfahren nach Anspruch 1, **dadurch gekennzeichnet, dass** der Porenbildner in stäbchenform vorliegt.

3. Verfahren nach Anspruch 1 oder 2, **dadurch gekennzeichnet, dass** der Porenbildner reiskornförmig vorliegt.

4. Schwammkörper hergestellt nach dem Verfahren nach einem der vorherigen Ansprüche, **dadurch gekennzeichnet, dass** der Schwammkörper (1) eine Dicke bis zu 3 cm, bevorzugt bis zu 2 cm aufweist.

5. Schwammkörper nach Anspruch 4, **dadurch gekennzeichnet, dass** das Raumgewicht des Schwammkörpers (1) zwischen 35 und 55 kg/m³ beträgt.

6. Schwammkörper nach Anspruch 4 oder 5, **dadurch gekennzeichnet, dass** der Schwammkörper (1) wenigstens zwei Hauptseiten (2, 3) aufweist.

7. Schwammkörper nach Anspruch 6, **dadurch gekennzeichnet, dass** zumindest eine Hauptseite (2, 3) durch eine Haut (4) gebildet ist.

8. Schwammkörper nach einem der Ansprüche 5 bis 8, **dadurch gekennzeichnet, dass** zumindest eine Hauptseite (2, 3) profiliert ist.

9. Schwammkörper nach einem der Ansprüche 4 bis 8, **dadurch gekennzeichnet, dass** zumindest eine Hauptseite (2, 3) mit einer Abrasivschicht (5) versehen ist.

## Claims

1. Process for the continuous production of sponge bodies (1) out of regenerated cellulose by use of at least partly agglomerated pore-forming agents which comprises first providing a viscose solution, admixing this viscose solution with the pore-forming agent, depositing the viscose solution on a continuously moving belt transporter, wherein the viscose solution on the belt transporter is led through baths to form a porous mass of regenerated cellulose, **characterized in that** the pore-forming agent undergoes pelletization.

2. Process according to Claim 1, **characterized in that** the pore-forming agent is present in the form of small rods.

3. Process according to Claim 1 or 2, **characterized in that** the pore-forming agent is present in rice grain form.

4. Sponge body obtained by the process according to any preceding claim, **characterized in that** the sponge body (1) has a thickness up to 3 cm, preferably up to 2 cm.

5. Sponge body according to Claim 4, **characterized in that** the density of the sponge body (1) is between 35 and 55 kg/m³.

6. Sponge body according to Claim 4 or 5, **characterized in that** the sponge body (1) has at least two main sides (2, 3).

7. Sponge body according to Claim 6, **characterized in that** at least one main side (2, 3) is formed by a skin (4).

8. Sponge body according to any one of Claims 5 to 8, **characterized in that** at least one main side (2, 3) is profiled.

9. Sponge body according to any one of Claims 4 to 8, **characterized in that** at least one main side (2, 3) is provided with an abrasive layer (5).

## Revendications

1. Procédé de fabrication continue de corps spongieux (1) à partir de cellulose régénérée, utilisant des agents porogènes au moins partiellement agglomérés, selon lequel une solution de viscose est tout d'abord préparée, l'agent porogène est incorporée à cette solution de viscose, la solution de viscose est placée sur une bande transporteuse se déplaçant en continu, la solution de viscose se trouvant sur la bande transporteuse étant acheminée dans des bains et une masse poreuse se formant ainsi à partir de la cellulose régénérée, **caractérisé en ce que** l'agent porogène est pastillé.

2. Procédé selon la revendication 1, **caractérisé en ce que** l'agent porogène se présente sous la forme de bâtonnets.

3. Procédé selon la revendication 1 ou 2, **caractérisé en ce que** l'agent porogène se présente sous la forme de grains de riz.

4. Corps spongieux fabriqué par le procédé selon l'une quelconque des revendications précédentes, **caractérisé en ce que** le corps spongieux (1) présente une épaisseur de jusqu'à 3 cm, de préférence de jusqu'à 2 cm.

5. Corps spongieux selon la revendication 4, **caractérisé en ce que** la densité apparente du corps spongieux (1) est comprise entre 35 et 55 kg/m³.

6. Corps spongieux selon la revendication 4 ou 5, **caractérisé en ce que** le corps spongieux (1) présente au moins deux côtés principaux (2, 3).

7. Corps spongieux selon la revendication 6, **caractérisé en ce qu'**au moins un côté principal (2, 3) est formé par une peau (4).

8. Corps spongieux selon l'une quelconque des revendications 5 à 8, **caractérisé en ce qu'**au moins un côté principal (2, 3) est profilé.

9. Corps spongieux selon l'une quelconque des revendications 4 à 8, **caractérisé en ce qu'**au moins un côté principal (2, 3) est muni d'une couche abrasive (5) .
